# FASCICULE DE BREVET EUROPEEN

(11) **EP 3 074 286 B1**
(45) Date de publication et mention de la délivrance du brevet: **19.08.2020**
(21) Numéro de dépôt: 14809309.9
(22) Date de dépôt: 25.11.2014
(51) Int. Cl.: B60T 13/68, F16D 65/00

(54) **SYSTEME ET PROCEDE DE FREINAGE**
BREMSSYSTEM UND BREMSVERFAHREN
BRAKING SYSTEM AND METHOD

(30) Priorité: 25.11.2013 FR 1361605
(43) Date de publication de la demande: 05.10.2016
(73) Titulaire: Renault S.A.S., 92100 Boulogne-Billancourt (FR)
(72) Inventeur: PERAIN, Frédéric, 78470 Saint-Rémy-Lès-Chevreuse (FR); PEDRON, Jean-Philippe, F-92000 Nanterre (FR)
(86) Numéro de dépôt international: PCT/EP2014/075577
(87) Numéro de publication internationale: WO 2015/075268

(56) Documents cités:
- WO-A1-2010/069832
- DE-A1- 19 607 048
- DE-A1-102008 052 536
- DE-A1-102010 043 202
- FR-A1- 2 882 314
- US-A1- 2001 035 677

## Description

La présente invention concerne un système de freinage notamment de type frein à disque pour véhicule automobile, ainsi qu'un procédé de freinage.

L'invention concerne également un véhicule, notamment un véhicule automobile, comprenant un tel système de freinage.

Traditionnellement, les véhicules automobiles comprennent un système de freinage comportant des modules de frein pourvus d'éléments de friction tels que des plaquettes de frein qui sont aptes à coopérer avec des disques solidaires de roues du véhicule afin de ralentir voire arrêter le déplacement de ce dernier.

Ces modules de frein comportent généralement un vérin hydraulique qui est apte à actionner un piston lié à ces plaquettes de frein.

En effet, quand une commande de freinage est actionnée, ce piston entraîne ces plaquettes contre la surface du disque sous l'action d'un liquide de frein envoyé par le vérin.

Lorsque cette commande de freinage n'est pas actionnée, aucune force ne s'exerce alors sur ces plaquettes de frein. Ainsi, dans cette configuration, ces plaquettes ne réalisent donc pas d'action de serrage contre ce disque mais restent cependant à proximité immédiate de ce dernier, voire à son contact.

Un tel contact constitue un inconvénient non négligeable dans le cadre du fonctionnement d'un véhicule car il engendre un couple de freinage résiduel qui génère une surconsommation énergétique et une diminution des performances de ce véhicule.

Pour pallier cet inconvénient, des modules de frein de systèmes de freinage prévoient l'utilisation d'éléments de rappel tels que des ressorts qui sont agencés entre un étrier et les plaquettes de frein d'un module de frein de sorte à éloigner chaque plaquette du disque par la présence d'un jeu géométrique positif.

Cependant, une telle configuration du module de frein a pour inconvénient majeur que de tels systèmes de freinage présentent un temps de réaction long lors de freinage du fait de la présence d'un tel jeu entre les plaquettes de frein et ce disque.

Il est toutefois connu, par le document WO 2010/069832, un système de freinage comportant un module de frein pourvu d'un dispositif de régulation du freinage apte à réduire un jeu du module de frein lors d'une détection d'un relâchement de la pédale d'accélérateur. Ce document ne divulgue toutefois pas d'éléments de rappel permettant d'éloigner les plaquettes du disque.

La présente invention a pour objet de remédier en tout ou partie aux différents inconvénients cités précédemment.

Dans ce dessein, l'invention concerne un système de freinage pour véhicule automobile, comportant au moins un module de frein d'une roue pourvu d'au moins un élément de rappel exerçant un effort permettant de positionner le module de frein dans un état avec jeu permettant de réduire tout frottement résiduel, ledit élément de rappel étant interposé entre un étrier et une plaquette de frein comprenant une plaque de support assemblée à une garniture, ladite plaquette étant montée mobile en translation de façon à pouvoir être serrée contre une surface de freinage d'un disque rotatif, ledit élément de rappel étant contraint quand la plaquette de frein est serrée sur le disque, ledit système de freinage comprenant un dispositif de régulation du freinage apte à réduire le jeu du module de frein lors d'une détection d'un relâchement de la pédale d'accélérateur pour réduire le temps de réponse du module de frein en cas freinage, caractérisé en ce que l'élément de rappel se présente sous la forme de deux branches parallèles, l'une liée à un support fixe de l'étrier, et l'autre reliée à la branche par une boucle de rappel élastique, et dont l'extrémité libre de la branche est repliée vers la branche de manière à former un V, et en ce que l'élément de rappel est fixé à la plaque de support par la branche et/ou l'extrémité libre.

Dans d'autres modes de réalisation :
- le dispositif de régulation du freinage comprend une pompe hydraulique, des valves d'admission et d'aspiration ainsi qu'un capteur de position d'une pédale d'accélérateur et un capteur d'actionnement d'une pédale de frein ;
- le système comprend une unité de commande électronique apte à contrôler le dispositif de régulation du freinage ;
- une plaquette de frein présente un jeu géométrique positif avec un disque de frein lorsque ce système de freinage n'est pas sollicité pour un freinage, et
- le dispositif de régulation du freinage est apte à réduire le jeu du module de frein lors d'une détection :
   ▪d'un passage entre le relâchement de la pédale d'accélérateur et l'actionnement de la pédale de frein qui est réalisé dans un laps de temps court, et/ou
   ▪d'une variation rapide d'un gradient de pression d'une pédale de frein.

L'invention concerne aussi un véhicule comprenant un tel système de freinage.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 est un schéma de principe du système de freinage selon ce mode de réalisation de l'invention ;
- la figure 2 représente un module de frein selon ce mode de réalisation de l'invention ;
- la figure 3 représente une vue en coupe A-A du module de frein selon ce mode de réalisation de l'invention ;
- la figure 4 est un exemple de courbe de décélération du véhicule en fonction du temps conforme au mode de réalisation de l'invention ;
- la figure 5 est un détail d'un élément de la présente invention.

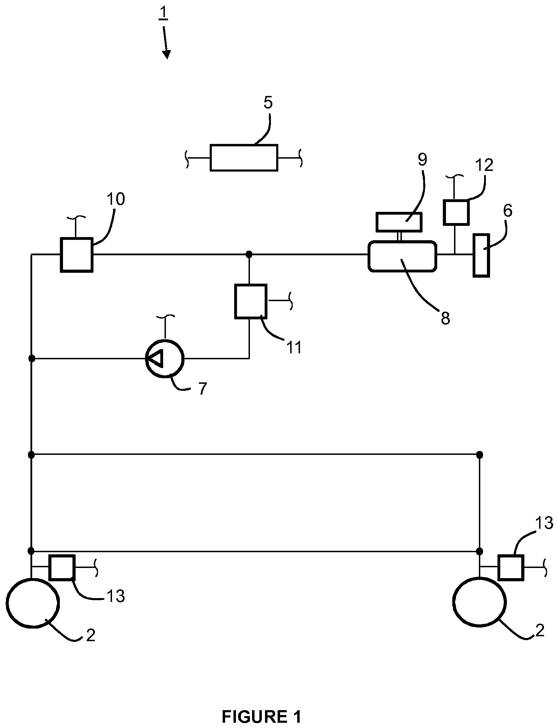

A la figure 1, est représenté un schéma de principe d'un système de freinage 1 selon un mode de réalisation de l'invention. Plus précisément cette figure illustre un des deux circuits hydrauliques de ce système de freinage 1.

Dans un véhicule automobile le système de freinage 1 comporte deux circuits de freinage prévus chacun uniquement pour deux roues dont les freins sont reliés entre eux.

On notera que les éléments essentiels pour le fonctionnement du système de freinage 1 pour ces deux circuits sont les mêmes.

Ce circuit hydraulique permet de transporter du fluide ici du liquide de frein entre les différents éléments du système de freinage 1.

Ce système de freinage 1 comprend une pédale de frein 6, destinée à transmettre et amplifier l'effort exercé par le conducteur lorsqu'il souhaite freiner le véhicule. Cette pédale de frein 6 est reliée à un maître-cylindre 8.
Ce maître-cylindre 8 est pourvu d'un réservoir 9 de liquide de frein et est prévu pour transformer l'effort exercé sur la pédale de frein 6 par le conducteur.

Ce système de freinage 1 comporte également des modules de frein 2 pour transformer la pression hydraulique en couple de freinage de chacune des roues et un dispositif de régulation du freinage qui permet de modifier ce couple de freinage exercé par chaque module de frein 2 sur une roue, en l'augmentant.

Le système de freinage 1 est également pourvu d'une unité de commande 5 électronique qui est apte à piloter le dispositif de régulation du freinage et en particulier les éléments le constituant.

Ce dispositif de régulation du freinage est utilisé de manière conjointe avec chaque module de frein 2 du système de freinage 1 pour agir sur le couple de freinage de chacune des roues.

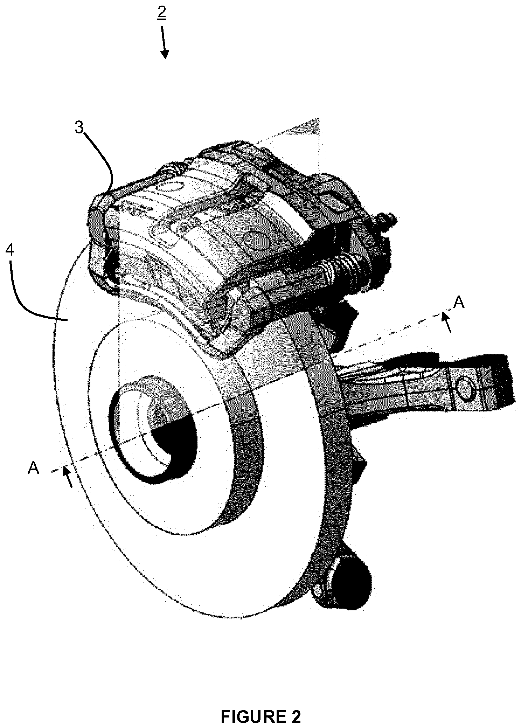

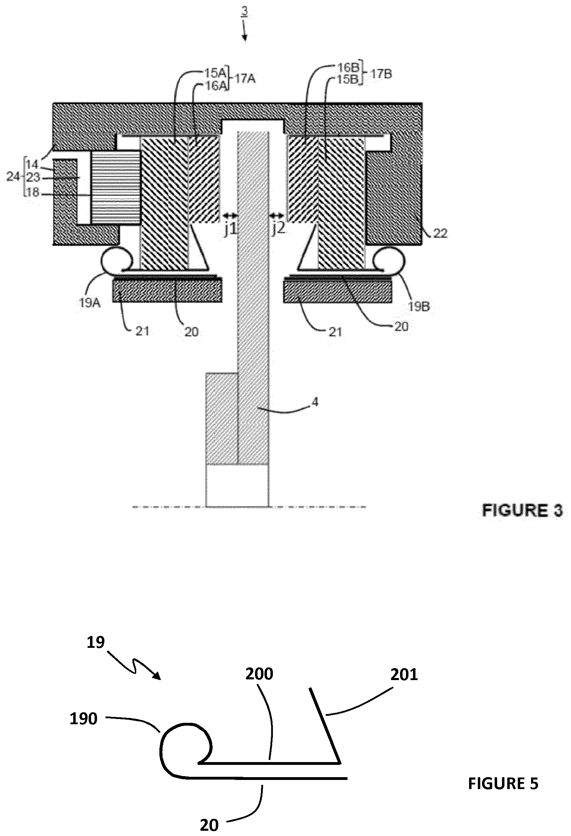

A la figure 2 est représenté un module de frein 2 mis en œuvre dans ce système de freinage 1, comprenant un étrier 3 qui est susceptible de porter des éléments de friction tels que des plaquettes 17A, 17B de frein, particulièrement visibles sur la figure 3. De telles plaquettes 17A, 17B de frein sont prévues pour coopérer avec un disque 4 rotatif associé à une roue, afin de transformer une pression hydraulique en couple de freinage de ladite roue.

La figure 3 est une vue en coupe A-A du module de frein 2. Cette vue est un schéma de principe du module de frein 2 dont l'étrier 3 comporte un boîtier 14 monté mobile qui est apte à coulisser selon un axe perpendiculaire au plan du disque 4.

Ce boîtier 14 comporte une chambre 23 dans laquelle un piston 18 est agencé coulissant. Cette chambre 23 est prévue pour recevoir un fluide tel que du liquide de frein provenant du circuit hydraulique du système de freinage 1 auquel elle est reliée.

Cette chambre 23 et le piston 18 coulissant forme un vérin hydraulique qui est susceptible d'être activé par le liquide de frein.

Ce boîtier 14 peut comporter également une partie formant un élément d'appui 22 qui est positionné à l'opposé du piston 18 de sorte que lorsque l'étrier 3 est monté sur le disque 4 de frein, l'élément d'appui 22 et le piston 18 sont alors agencés de chaque côté de ce dernier.

L'étrier 3 comporte aussi un support fixe 21 sur lequel les deux plaquettes 17A, 17B de frein sont montées mobiles en translation selon un axe perpendiculaire au plan défini par le disque 4.

Une première plaquette 17A est agencée entre le piston 18 et le disque 4 et une deuxième plaquette 17B entre le disque 4 et l'élément d'appui 22.

Ces plaquettes 17A, 17B sont toutes deux comprises dans un plan qui est parallèle au plan défini par ce disque 4.

Chaque plaquette 17A, 17B de frein comprend une plaque de support 15A, 15B assemblée à une garniture 16A, 16B de freinage. Cette garniture 16A, 16B est destinée à être en contact avec la surface de freinage du disque 4.

Chacune de ces plaquettes 17A, 17B de frein est pourvue d'au moins un élément de rappel 19 au niveau d'au moins une de ses extrémités. Cet élément de rappel 19 est porté par le support fixe 21 de l'étrier 3.

L'élément de rappel 19, qui peut être un ressort, vise à écarter chaque plaquette 17A, 17B de la surface de freinage du disque 4, d'un jeu j1, j2 permettant d'éviter des frottements résiduels entre ces plaquettes 17A, 17B et ce disque 4. De tels frottements étant à l'origine de couple de freinage résiduel.

Cet élément de rappel 19 permet de maintenir constamment ce jeu j1, j2 géométrique positif entre ce disque 4 et chaque plaquette 17A, 17B tant que le système de freinage 1 n'est pas sollicité dans le cadre d'un freinage.

L'élément de rappel 19 comprend une partie 20 qui peut être solidarisée à l'étrier 3. Il comprend également une partie déformable constituée de deux branches formées par une lame ressort pliée en forme de V et dont l'extrémité d'une des branches est apte à prendre appui sur la face de la garniture 16A, 16B qui est en regard de la surface de freinage du disque 4.

Plus précisément, en référence aux figures 3 et 5, l'élément de rappel 19, qu'il s'agisse de l'élément 19A ou 19B, dans sa présentation générale, se présente sous la forme de deux branches parallèles, l'une 20, liée au support fixe 21, et l'autre 200, reliée à la branche 20 par une boucle de rappel élastique 190. L'extrémité libre 201 de la branche 200 est repliée vers la branche 200 de manière à former un V.

Par ailleurs, selon l'exemple de réalisation, la plaque de support 15 présente une longueur supérieure à la garniture 16, de sorte que l'élément de rappel 19 est ainsi fixé à la plaque de support, par la branche 200 et/ou l'extrémité libre 201, de sorte que l'élément de rappel ne soit pas en interaction directe avec la garniture 16.

Dès lors, tout mouvement de l'ensemble plaque de support 15 / garniture 16 est rappelé en position initiale par la boucle de rappel élastique 190.

Les deux branches de cette lame de ressort peuvent s'écarter élastiquement l'une de l'autre, lorsque le ressort est contraint durant le freinage.

La partie 20 de cet élément de rappel 19 peut présenter une forme particulière permettant de le fixer mécaniquement au support fixe 21 par clipage, ou encore par emboitement.

Ainsi que nous l'avons vu, ce système de freinage 1 comporte également un dispositif de régulation du freinage permettant de modifier le couple de freinage au niveau des roues du véhicule, en l'augmentant.

Ainsi que l'illustre la figure 1, ce dispositif de régulation du freinage est muni d'une pompe hydraulique 7 comportant une entrée de liquide de frein reliée directement au maître-cylindre 8 et une sortie de liquide de frein reliée à la partie du circuit hydraulique du système de freinage qui est reliée aux modules de frein 2.

Lorsqu'elle est activée, cette pompe hydraulique 7 est apte à prélever du liquide de frein au niveau du maître-cylindre 8 afin de le faire circuler sous pression dans le circuit hydraulique du système de freinage 1 vers un ou plusieurs modules de frein 2.

Le dispositif de régulation du freinage comprend également une vanne d'admission 10 normalement ouverte.

Il comprend également une vanne d'aspiration 11 normalement fermée, placée entre le maître-cylindre 8 et l'entrée de cette pompe hydraulique 7.

Le dispositif de régulation du freinage comporte aussi des capteurs tels que :
- un capteur de position de la pédale d'accélérateur pour détecter le relâchement de cette pédale par le conducteur, et
- un capteur d'actionnement 12 de la pédale de frein 6.

De manière optionnelle, ce dispositif de régulation de freinage peut comprendre également un capteur de mesure 13 permettant de déterminer le jeu j1, j2 entre le disque 4 de frein et chaque plaquette 17A, 17B.

Ce dispositif de régulation du freinage est susceptible d'être contrôlé par une unité de commande 5 électronique à partir de données de mesures qu'il aura collectées et traitées en provenance notamment de ces capteurs installés dans le véhicule.

L'invention concerne également un procédé de freinage mis en œuvre par le système de freinage 1.

Dans ce procédé de freinage, lorsque le conducteur du véhicule automobile relâche son effort sur la pédale d'accélérateur, un signal électrique est émis vers l'unité de commande 5 par le capteur de position qui a détecté ce relâchement.

Ce signal correspond à un certain gradient de libération de cette pédale d'accélérateur qui dépasse un gradient de référence préalablement défini et configurable.

D'autres signaux électriques peuvent également être exploités par l'unité de commande 5 provenant d'un capteur de mesure 13 des jeux j1, j2 entre les plaquettes 17A, 17B de frein et le disque 4 de chaque module de frein 2.

L'unité de commande 5 détermine alors en fonction des jeux j1 et j2, un volume de liquide de frein à introduire dans le circuit hydraulique du système de freinage 1.

En effet, l'activation de l'injection de ce volume de liquide de frein dans le circuit hydraulique est réalisée :
- uniquement lors du relâchement de la pédale d'accélérateur ;
- si le temps t1 mesuré entre le relâchement de la pédale d'accélérateur et l'appui sur la pédale de frein est inférieur à un temps seuil t2 de relâchement de la pédale d'accélérateur ; et/ou
- si le temps t3 mesuré pour passer d'un gradient g1 de pression de freinage mesuré à un gradient de référence g2, est supérieur à un temps t4 seuil.

Ainsi, si le temps t1 mesuré est inférieur au temps t2 seuil alors l'unité de commande 5 détermine alors que le passage entre le relâchement de la pédale d'accélérateur et l'actionnement de la pédale de frein est réalisé dans un laps de temps court et déclenche alors l'injection du liquide de frein afin de réaliser une fonction de «pré-remplissage» du circuit hydraulique pour rattraper les jeux j1 et j2.

De même, si le temps t3 mesuré est supérieur au temps t4 seuil, alors l'unité de commande 5 détermine alors que la variation du gradient de pression de la pédale de frein en passant du gradient de pression g1 mesuré au gradient g2, est rapide et déclenche alors l'injection du liquide de frein afin de réaliser cette fonction de «pré-remplissage».

La fréquence d'activation de cette injection est configurable en paramétrant notamment les temps t2, t4 seuils et/ou le gradient g2 de référence afin par exemple qu'une telle injection ne soit pas mise en œuvre que lors de freinages d'urgence.

Ce volume peut être préalablement déterminé par la mesure des jeux j1 et j2 lors de l'agencement des plaquettes 17A, 17B dans le module de frein 2.

Dans une variante, ce volume peut également être déterminé par une mesure de ces jeux j1, j2 réalisée par le capteur de mesure 13. Cette mesure de ces jeux j1 et j2 peut alors être réalisée selon une fréquence de prise de mesure définie à l'avance ou encore à chaque fois que la pédale d'accélérateur est relâchée par le conducteur en vue d'un futur freinage.

Un tel volume de liquide de frein doit être suffisant pour provoquer le déplacement de chaque plaquette 17A, 17B sur une distance sensiblement équivalente au jeu j1, j2 présent entre chacune de ces dernières et le disque 4. Ainsi, ces plaquettes 17A, 17B sont alors maintenues dans une position dans laquelle leur face en regard de la surface de freinage du disque 4 puisse être agencée à proximité immédiate voire au contact de cette surface de freinage du disque 4.

Cette unité de commande 5 contrôle également l'activation de la vanne d'admission 10 qui vise à provoquer sa fermeture ce qui a pour effet d'isoler le maître-cylindre 8 du circuit de freinage.

La vanne d'aspiration 11 est également activée par cette unité de commande 5 de sorte à être ouverte et mettre ainsi en relation la pompe hydraulique 7 avec le maître-cylindre 8.

L'unité de commande 5 active ensuite la pompe hydraulique 7 qui peut ainsi prélever ce volume de liquide de frein directement au niveau du maître-cylindre 8 ou de son réservoir 9. Ce volume de liquide de frein sous pression est destiné à être envoyé en direction de l'étrier 3 du module de frein 2.

L'injection de ce volume de liquide de frein dans le circuit hydraulique par la pompe hydraulique 7 de ce dispositif de régulation du freinage vise à réaliser la fonction de «pré-remplissage» du circuit hydraulique jusqu'à la chambre 23 avant que le conducteur utilise activement la pédale de frein 6.

Ce pré remplissage provoque l'actionnement par ce volume de liquide de freinage du vérin 24 formé par la chambre 23 du boîtier 14 et le piston 18.

Le piston 18 coulisse alors par rapport au boitier mobile 14 en se rapprochant du disque 4 et ce sur une distance qui est sensiblement similaire au jeu j1 qu'il y a entre la première plaquette 17A qui est susceptible d'être entrainée par ce piston 18, et le disque 4. Ainsi le piston 18 pousse alors cette plaquette 17A de sorte à ce qu'elle soit positionnée à proximité voire au contact de la surface de freinage du disque 4 rotatif.

De manière simultanée l'élément d'appui 22 se rapproche également du disque 4, en poussant la plaquette 17B de frein contre le disque 4 rotatif jusqu'à ce qu'elle soit également positionnée à proximité voire au contact de la surface de freinage de ce disque 4. En effet, en étant actionné, le vérin 24 est alors apte à mettre en mouvement le boitier mobile 14 dont une partie forme l'élément d'appui 22, par rapport au support fixe 21, suivant une direction perpendiculaire au plan défini par le disque 4 et sur une distance de déplacement qui est sensiblement similaire au jeu j2.

Ainsi avant l'actionnement de la pédale de frein 6 par le conducteur, dans chaque module de frein 2 les garnitures 16A, 16B des plaquettes 17A, 17B, positionnées en regard l'une de l'autre de chaque côté du disque 4, vont alors être maintenues agencées à proximité voire au contact de ce disque 4 avec des éléments de rappel 19A, 19B qui ont subis une déformation en étant contraint sous l'effet de l'action du vérin.

Cette fonction de pré remplissage prévoit que le volume de liquide de frein doit être suffisant pour maintenir ces plaquettes 17A et 17B dans cette position et pour résister à la force de rappel exercée par ces éléments de rappel 19A et 19B sur ces dernières.

On notera que, le coefficient de raideur de chaque élément de rappel 19 est choisi de façon à ce qu'il ne puisse pas perturber l'action du vérin.

Lorsque le conducteur actionne la pédale de frein 6, un signal électrique est émis vers l'unité de commande 5 par le capteur d'actionnement 12 de cette pédale de frein 6.

Ce signal correspond au gradient de pression g1 de cette pédale de frein 6 qui atteint voire dépasse le gradient de référence g2 prédéfini et configurable.

L'unité de commande 5 déclenche alors l'activation des vannes d'admission 10 et d'aspiration 11 qui repassent dans leur configuration normale respectivement ouverte et fermée.

Cet actionnement de la pédale de frein 6 commande l'émission du liquide de frein sous pression en sortie du maître-cylindre 8 qui traverse alors la vanne d'admission 10 ouverte et vient augmenter la pression dans le circuit hydraulique en complétant le volume de liquide de frein déjà présent dans ce circuit.

Ainsi, le vérin 24 est alors actionné de nouveau par le liquide de frein. Le piston 18 poursuit alors sont coulissement par rapport au boitier mobile 14 en entraînant la plaquette 17A de frein, déjà à proximité voire en contact du disque 4 rotatif, en direction de ce dernier.

De même, pour la partie de ce boîtier 14 formant un élément d'appui 22 qui poursuit également son rapprochement du disque 4, en poussant la plaquette 17B, déjà à proximité voire en contact du disque 4 rotatif, en direction de ce dernier.

Dans chaque module de frein 2, les garnitures 16A, 16B de freinage des plaquettes 17A, 17B positionnées en regard l'une de l'autre de chaque côté du disque 4 vont alors réaliser une action de serrage sur le disque 4 et les éléments de rappel 19A, 19B vont alors poursuivre leur déformation en étant contraint sous l'effet de l'action du vérin.

Cette action de serrage provoque alors par frottement le freinage de la rotation du disque 4 et donc de la roue à laquelle il est associé.

Lorsque le conducteur réduit ou cesse d'exercer un effort sur la pédale de frein 6, la pression hydraulique diminue dans le circuit hydraulique et le liquide sous pression contenu dans les étriers 3 est redirigé vers le maître-cylindre 8, via la vanne d'admission 10 ouverte.

Dans chaque module de frein 2, les éléments de rappel 19A et 19B en reprenant leur forme initiale et en repoussant les plaquettes 17A, 17B de frein, rappellent le piston 18 dans sa position initiale ainsi que la partie du boitier 14 formant l'élément d'appui 22 de sorte que les garnitures 16A, 16B des plaquettes 17A, 17B ne soient plus en contact avec le disque 4 en présentant alors des jeux j1 et j2 positifs avec ce dernier.

Les frottements entre ces plaquettes 17A, 17B et le disque 4 sont alors supprimés évitant la génération d'un couple de freinage résiduel par le module de frein 2.

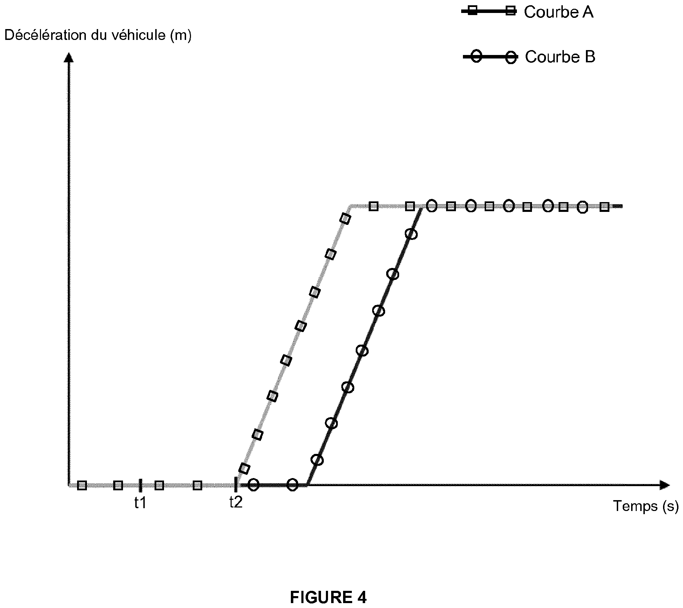

Ainsi, ce système de freinage 1 permet d'améliorer le temps de freinage du véhicule par rapport à un système de freinage dépourvu d'un dispositif de régulation de freinage ainsi que l'illustre la figure 4.

Sur cette figure 4, deux courbes A et B sont représentées et mettent en évidence la différence de temps de décélération entre un véhicule pourvu d'un système de freinage 1 conforme à l'invention, illustré par la courbe A et un véhicule dont le système de freinage ne comporte pas de dispositif de régulation de freinage, illustré par la courbe B.

Lors de la décélération du véhicule représentée à la courbe A dès que le conducteur du véhicule relâche la pédale d'accélérateur à l'instant t1 un volume de liquide de frein est injecté dans le circuit hydraulique et permet alors aux plaquettes 17A, 17B de chaque module de frein 2 de rattraper les jeux j1, j2 qu'elles ont avec le disque 4 et d'avoir ainsi leur garniture 16A, 16B agencées à proximité voire au contact de ce disque 4.

Ainsi à l'instant t2 lorsque le conducteur actionne la pédale de frein 6 le serrage du disque 4 par les garnitures 16A, 16B est quasi immédiat du fait qu'elles soient agencées à proximité voire au contact des surfaces de freinage de ce disque 4.

Or, lors de la décélération du véhicule illustrée à la courbe B, lorsque le conducteur relâche la pédale d'accélérateur à l'instant t1 les jeux présents entre les plaquettes et le disque ne varient pas. Ainsi, lorsque le conducteur actionne la pédale de frein à l'instant t2 les plaquettes doivent alors se déplacer par translation en direction du disque afin de rattraper ces jeux afin de pouvoir ensuite effectuer le serrage de ce disque.

Ces courbes A et B mettent bien en évidence l'efficacité du système de freinage 1 qui présente une grande réactivité lors d'une procédure de freinage.

On notera enfin que le module de frein en étant pourvu d'un tel élément de rappel 19 et d'une fonction de pré-remplissage du circuit hydraulique en liquide de frein permet ainsi de réduire :
- l'usure des freins par frottements résiduels entre les plaquettes et le disque de frein ;
- le bruit résultant de ces frottements, et
- la consommation du véhicule et donc la limitation des émissions de dioxyde de carbone (CO2) par ce dernier.

La présente invention n'est pas limitée aux modes de réalisation qui ont été explicitement décrits, mais elle en inclut les diverses variantes et généralisations contenues dans le domaine des revendications ci-après.

## Revendications

1. Système de freinage (1) pour véhicule automobile, comportant au moins un module de frein (2) d'une roue pourvu d'au moins un élément de rappel (19) exerçant un effort permettant de positionner le module de frein dans un état avec jeu (j1, j2) permettant de réduire tout frottement résiduel, ledit élément de rappel (19) étant interposé entre un étrier (3) et une plaquette (17A, 17B) de frein comprenant une plaque de support (15A, 15B) assemblée à une garniture 16A, 16B, ladite plaquette (17A, 17B) étant montée mobile en translation de façon à pouvoir être serrée contre une surface de freinage d'un disque (4) rotatif, ledit élément de rappel (19) étant contraint quand la plaquette (17A, 17B) de frein est serrée sur le disque (4), ledit système de freinage (1) comprenant un dispositif de régulation du freinage apte à réduire le jeu (j1, j2) du module de frein (2) lors d'une détection d'un relâchement de la pédale d'accélérateur pour réduire le temps de réponse du module de frein en cas freinage, **caractérisé en ce que** l'élément de rappel se présente sous la forme de deux branches parallèles, l'une (20) liée à un support fixe (21) de l'étrier (3), et l'autre (200) reliée à la branche (20) par une boucle de rappel élastique (190), et dont l'extrémité libre (201) de la branche (200) est repliée vers la branche (200) de manière à former un V, et **en ce que** l'élément de rappel (19) est fixé à la plaque de support (15A, 15B) par la branche (200) et/ou l'extrémité libre (201).

2. Système de freinage (1) selon la revendication précédente, **caractérisé en ce que** le dispositif de régulation du freinage comprend une pompe hydraulique (7), des valves d'admission (10) et d'aspiration (11) ainsi qu'un capteur de position d'une pédale d'accélérateur et un capteur d'actionnement (12) d'une pédale de frein (6).

3. Système de freinage (1) selon l'une quelconque des revendications précédentes, **caractérisé en ce qu'**il comprend une unité de commande (5) électronique apte à contrôler le dispositif de régulation du freinage.

4. Système de freinage (1) selon l'une quelconque des revendications précédentes, **caractérisé en ce qu'**une plaquette (17A, 17B) de frein présente un jeu (j1, j2) géométrique positif avec un disque (4) de frein lorsque ce système de freinage (1) n'est pas sollicité pour un freinage.

5. Système de freinage (1) selon l'une quelconque des revendications précédentes, **caractérisé en ce que** le dispositif de régulation du freinage est apte à réduire le jeu (j1, j2) du module de frein (2) lors d'une détection :
- d'un passage entre le relâchement de la pédale d'accélérateur et l'actionnement de la pédale de frein qui est réalisé dans un laps de temps court, et/ou
- d'une variation rapide d'un gradient de pression d'une pédale de frein.

6. Véhicule comprenant un système de freinage (1) selon l'une quelconque des revendications 1 à 5.

## Patentansprüche

1. Bremssystem (1) für ein Kraftfahrzeug, das mindestens ein Bremsmodul (2) eines Rads versehen mit mindestens einem Rückstellelement (19) aufweist, das eine Kraft ausübt, die es ermöglicht, das Bremsmodul in einem Zustand mit Spiel (j1, j2) zu positionieren, was es ermöglicht, jede Restreibung zu reduzieren, wobei das Rückstellelement (19) zwischen einen Bremssattel (3) und einen Bremsklotz (17A, 17B) eingefügt ist, der eine Tragplatte (15A, 15B) enthält, die mit einem Belag (16A, 16B) zusammengebaut ist, wobei der Klotz (17A, 17B) translationsbeweglich montiert ist, um gegen eine Bremsfläche einer drehenden Scheibe (4) geklemmt werden zu können, wobei das Rückstellelement (19) beansprucht wird, wenn der Bremsklotz (17A, 17B) auf die Scheibe (4) geklemmt ist, wobei das Bremssystem (1) eine Regelungsvorrichtung des Bremsvorgangs enthält, die das Spiel (j1, j2) des Bremsmoduls (2) bei einer Erfassung eines Loslassens des Gaspedals reduzieren kann, um die Reaktionszeit des Bremsmoduls im Bremsfall zu reduzieren, **dadurch gekennzeichnet, dass** das Rückstellelement in Form von zwei parallelen Schenkeln vorliegt, von denen der eine (20) mit einem ortsfesten Träger (21) des Bremssattels (3) und der andere (200) mit dem Schenkel (20) über eine elastische Rückstellschleife (190) verbunden ist, und wobei das freie Ende (201) des Schenkels (200) zum Schenkel (200) umgebogen ist, um ein V zu formen, und dass das Rückstellelement (19) an der Tragplatte (15A, 15B) durch den Schenkel (200) und/oder das freie Ende (201) befestigt ist.

2. Bremssystem (1) nach dem vorhergehenden Anspruch, **dadurch gekennzeichnet, dass** die Regelungsvorrichtung des Bremsvorgangs eine Hydraulikpumpe (7), Einlass- (10) und Ansaugventile (11) sowie einen Positionssensor eines Gaspedals und einen Betätigungssensor (12) eines Bremspedals (6) enthält.

3. Bremssystem (1) nach einem der vorhergehenden Ansprüche, **dadurch gekennzeichnet, dass** es eine elektronische Steuereinheit (5) enthält, die die Regelungsvorrichtung des Bremsvorgangs kontrollieren kann.

4. Bremssystem (1) nach einem der vorhergehenden Ansprüche, **dadurch gekennzeichnet, dass** ein Bremsklotz (17A, 17B) ein positives geometrisches Spiel (j1, j2) mit einer Bremsscheibe (4) aufweist, wenn dieses Bremssystem (1) nicht für einen Bremsvorgang beaufschlagt wird.

5. Bremssystem (1) nach einem der vorhergehenden Ansprüche, **dadurch gekennzeichnet, dass** die Regelungsvorrichtung des Bremsvorgangs das Spiel (j1, j2) des Bremsmoduls (2) bei einer Erfassung reduzieren kann:
- eines Übergangs zwischen dem Loslassen des Gaspedals und der Betätigung des Bremspedals, der in einem kurzen Zeitraum durchgeführt wird, und/oder
- einer schnellen Änderung eines Druckgradienten eines Bremspedals.

6. Fahrzeug, das ein Bremssystem (1) nach einem der Ansprüche 1 bis 5 enthält.

## Claims

1. Braking system (1) for a motor vehicle, comprising at least one brake module (2) of a wheel provided with at least one return element (19) exerting a force making it possible to position the brake module in a state with play (j1, j2) that makes it possible to reduce any residual friction, said return element (19) being interposed between a calliper (3) and a brake pad (17A, 17B) comprising a support plate (15A, 15B) assembled with a friction lining (16A, 16B), said pad (17A, 17B) being mounted to be mobile in translation so as to be able to be clamped against a braking surface of a rotary disc (4), said return element (19) being stressed when the brake pad (17A, 17B) is clamped on the disc (4), said braking system (1) comprising a braking regulation device capable of reducing the play (j1, j2) of the brake module (2) upon a detection of a releasing of the accelerator pedal to reduce the response time of the brake module in the event of braking, **characterized in that** the return element takes the form of two parallel branches, one (20) linked to a fixed support (21) of the calliper (3), and the other (200) linked to the branch (20) by an elastic return loop (190) and of which the free end (201) of the branch (200) is folded back towards the branch (200) so as to form a V, and **in that** the return element (19) is fixed to the support plate (15A, 15B) by the branch (200) and/or the free end (201) .

2. Braking system (1) according to the preceding claim, **characterized in that** the braking regulation device comprises a hydraulic pump (7), intake (10) and suction (11) valve and an accelerator pedal position sensor and a brake pedal (6) actuation sensor (12).

3. Braking system (1) according to either one of the preceding claims, **characterized in that** it comprises an electronic control unit (5) capable of controlling the braking regulation device.

4. Braking system (1) according to any one of the preceding claims, **characterized in that** a brake pad (17A, 17B) has a positive geometrical play (j1, j2) with a brake disc (4) when this braking system (1) is not stressed for braking.

5. Braking system (1) according to any one of the preceding claims, **characterized in that** the braking regulation device is capable of reducing the play (j1, j2) of the brake module (2) upon a detection:
- of a transition between the releasing of the accelerator pedal and the actuation of the brake pedal which takes place within a short time period, and/or
- a rapid variation of a pressure gradient of a brake pedal.

6. Vehicle comprising a braking system (1) according to any one of Claims 1 to 5.
